# EUROPÄISCHE PATENTSCHRIFT

(11) **EP 2 312 444 B1**
(45) Veröffentlichungstag und Bekanntmachung des Hinweises auf die Patenterteilung: **01.05.2019**
(21) Anmeldenummer: 10011230.9
(22) Anmeldetag: 28.09.2010
(51) Int. Cl.: G06F 11/14

(54) **Verfahren zum Schreiben von Datensätzen in einen nicht-flüchtigen Datenspeicher**
Method for writing datasets in a non-volatile data storage device
Procédé d'écriture d'ensembles de données dans une mémoire non volatile

(30) Priorität: 02.10.2009 DE 102009048144
(43) Veröffentlichungstag der Anmeldung: 20.04.2011
(73) Patentinhaber: Giesecke+Devrient Mobile Security GmbH, 81677 München (DE)
(72) Erfinder: Hockauf, Robert, 85567 Grafing (DE); Baldischweiler, Michael, 81825 München (DE)

(56) Entgegenhaltungen:
- EP-A2- 0 990 987
- EP-A2- 1 308 842

## Beschreibung

Die Erfindung betrifft ein Verfahren zum gesicherten Schreiben von Datensätzen in einen nicht-flüchtigen Datenspeicher, der mehrere zu Speicherseiten gruppierte Speicherwörter aufweist, insbesondere vom Typ NAND-Flash. Derartige nicht-flüchtige Datenspeicher weisen mehrere zu Speicherseiten gruppierte Speicherwörter auf.

Ressourcenbeschränkte, kompakte Systeme, wie z.B. Chipkarten oder Sicherheitsmodule, sollen einen sicheren Betrieb auch bei ungünstigen Umgebungsbedingungen gewährleisten. Dieses Erfordernis bedingt insbesondere, dass ein plötzlicher Stromausfall oder eine sonstige Betriebsstörung auf keinen Fall zu einer nicht vorgesehenen Datenkorrumpierung führen darf. Insbesondere im Zusammenhang mit Chipkarten oder Sicherheitsmodulen ist dies eine wichtige Forderung, weil häufig erhebliche Sicherheitsinteressen auf dem Spiel stehen und weil das gezielte Abtrennen der Versorgungsspannung des Systems ein gut bekanntes Angriffsverfahren darstellt.

Um eine Datenkorrumpierung zu vermeiden, wurden Mechanismen des sicheren Schreibens von Daten in einem Datenspeicher entwickelt. Unter einem "sicheren Schreiben" wird ein Mechanismus verstanden, der einen Schreibvorgang in dem nicht-flüchtigen Speicher so absichert, dass der Speicherinhalt auch nach einer Stromunterbrechung in einem definierten Zustand ist oder in einen solchen zurückgeführt wird.

Ein derartiges Verfahren ist beispielsweise aus der EP 1 308 842 A2 bekannt, das für Chipkarten eingesetzt werden kann. Das Verfahren in dieser Schrift geht davon aus, bei einem sog. nicht-atomaren Schreibvorgang während einer Transaktion nicht nur den Inhalt des Datenspeichers, sondern gegebenenfalls auch den Inhalt eines Rückführpuffers zu ändern. Dieses Verfahren findet Anwendung bei der Speicherverwaltung für einen nur seitenweise beschreibbaren Datenspeicher.

Aus der EP 990 987 A2 ist ein Verfahren zum sicheren Ausführen von Programmier- oder Löschoperationen im nichtflüchtigen Speicher einer Speicherkarte bekannt, das geeignet ist Fehlersituationen infolge von Spannungsunterbrechungen aufzufangen. Neben einem Haupt-Flash-Speicher ist dazu ein zusätzlicher nichtflüchtiger Hilfsspeicher vorgesehen, der besonders kurze Schreibzeiten aufweist. In den Hilfsspeicher wird parallel zu Änderungen des Hauptspeichers für jeden neuen Betriebszustand des Hauptspeichers eine Bus-Statusinformation abgelegt. Die Bus-Statusinformation beinhaltet jeweils eine Adreßangabe. Die Bus-Information wird regelmäßig überschrieben, so daß der Hilfsspeicher klein sein kann. Tritt ein Fehler auf, z.B. eine Spannungsunterbrechung, kann die CPU mithilfe der Bus-Information aus dem Hilfsspeicher den Betriebszustand des Hauptspeichers zum Zeitpunkt des Fehlers ermitteln.

Ein anderes Verfahren zum sicheren Schreiben von Daten ist in der EP 1190 324 B1 beschrieben. Dieses Verfahren geht von einem Ringspeicher aus, der eine gegebene Anzahl von Speicherplätzen aufweist, wobei eine zyklische Datei in dem Ringspeicher eine Reihe von Datensätzen enthält, von denen jeweils ein Datensatz in einem Speicherplatz gespeichert ist. Die Datensätze werden zyklisch nacheinander in den Ringspeicher eingeschrieben, mit der Maßgabe, dass zum Einschreiben eines neuen Datensatzes der jeweils älteste Datensatz überschrieben wird. Der jeweils "aktuelle" oder jüngste Datensatz befindet sich in einem Speicherplatz, der durch einen Zeiger adressiert wird. Für das Einschreiben aufeinander folgender Datensätze wird der Zeiger jeweils um eine Speicherplatzadresse - zyklisch - erhöht. Um zu verhindern, dass beispielsweise aufgrund eines Stromausfalls eine Zeigerinformation verloren geht, da dann keine Information über die Stelle vorliegt, in der der nächste Datensatz abzuspeichern ist, schlägt die genannte EP-Schrift vor, statt eines einzigen Zeigers einen weiteren, redundanten Zeiger abzuspeichern. Dies erfolgt insbesondere zeitlich gestaffelt, so dass bei einer möglicherweise eintretenden Störung im Verlauf des Schreibens der beiden Zeiger mindestens ein Zeiger die korrekte Zeigerinformation beinhaltet.

Bei nicht-flüchtigen Datenspeichern, welche mehrere zu Speicherseiten (Pages) gruppierte Speicherwörter aufweisen, können die Bits eines Speicherworts zwar einzeln auf einen einzigen Binärwert - z.B. den Wert "1" - gesetzt werden, aber nur jeweils alle Bits einer ganzen Speicherseite auf den anderen Binärwert - z.B. den Wert "0" - gelöscht werden. Diese Einschränkung findet sich beispielsweise bei Chipkarten, deren Datenspeicher als sog. FLASH-Speicher ausgestattet ist. Die Verwendung derartiger FLASH-Speicher ist jedoch insbesondere für leistungsstarke Systeme wünschenswert, weil dieser Speichertyp gegenüber herkömmlichen EEPROMs beträchtliche Vorteile hinsichtlich der Schreibzeit, der erforderlichen Programmierspannung und der erzielbaren Speicherdichte hat.

Das sichere Schreiben von Daten in einen nicht-flüchtigen Datenspeicher, der mehrere zu Speicherseiten gruppierte Speicherwörter aufweist, ist jedoch bei einem Datenspeicher in der sog. NAND-Technologie schwierig zu realisieren, da die Schreib-/Löschzyklen einer Speicherseite limitiert sind.

Es ist daher Aufgabe der vorliegenden Erfindung, ein Verfahren sowie eine Vorrichtung anzugeben, mit welchen ein sicherer Schreibvorgang auf eine Speicherseite eines nicht-flüchtigen Datenspeichers, insbesondere vom Typ NAND-Flash, ermöglicht ist.

Diese Aufgaben werden gelöst durch ein Verfahren gemäß den Merkmalen des Patentanspruchs 1 sowie eine Vorrichtung gemäß den Merkmalen des Patentanspruchs 11. Vorteilhafte Ausgestaltungen ergeben sich aus den abhängigen Patentansprüchen.

Die Erfindung schafft ein Verfahren zum gesicherten Schreiben von Datensätzen in einen nicht-flüchtigen Datenspeicher, der mehrere zu Speicherseiten gruppierte Speicherwörter aufweist. Insbesondere ist der nicht-flüchtige Datenspeicher vom Typ NAND-Flash. Ein Datensatz kann hierbei einem Speicherwort entsprechen, aber auch aus mehreren Speicherwörtern bestehen. Bei dem erfindungsgemäßen Verfahren werden die Datensätze in den nicht-flüchtigen Datenspeicher sequentiell eingeschrieben. Ein Zeiger in den nicht-flüchtigen Datenspeicher wird erfindungsgemäß nach dem erfolgten Schreiben eines Datensatzes sicher in einen weiteren Datenspeicher geschrieben, wobei der Zeiger eine Speicheradresse angibt, in die oder ab der ein nächster Datensatz in den nicht-flüchtigen Datenspeicher zu schreiben ist.

Die Erfindung schafft ferner eine Vorrichtung zum gesicherten Schreiben von Datensätzen, welche einen nicht-flüchtigen Datenspeicher, der mehrere zu Speicherseiten gruppierte Speicherwörter aufweist, in den die Datensätze sequentiell einschreibbar sind. Insbesondere ist der nicht-flüchtige Datenspeicher vom Typ NAND-Flash. Die Vorrichtung umfasst einen weiteren Datenspeicher, insbesondere ein EEPROM, dem ein Mittel für sicheres Schreiben von Daten zugeordnet ist. Ferner ist ein Controller vorgesehen, der dazu ausgebildet ist, einen Zeiger in den nicht-flüchtigen Datenspeicher nach dem erfolgten Schreiben eines Datensatzes sicher in den weiteren Datenspeicher zu schreiben, wobei der Zeiger eine Speicheradresse angibt, in die ein nächster Datensatz in den nicht-flüchtigen Datenspeicher zu schreiben ist. Vorzugsweise ist der weitere Datenspeicher der Datenspeicher eines tragbaren Datenträgers, insbesondere einer Chipkarte oder einer Smartcard.

Die Erfindung verbindet die Vorteile bezüglich der sequentiellen Programmierung und der maximalen Performance des nicht-flüchtigen Datenspeichers mit dem bewährten sicheren Schreibkonzept eines weiteren Datenspeichers, wie es beispielsweise in einer Smartcard eingesetzt wird. Insbesondere muss mit dem erfindungsgemäßen Vorgehen keine Rücksicht auf die maximalen Schreibzyklen auf eine Speicherseite in dem nicht-flüchtigen Datenspeicher genommen werden. Die Sicherung des Schreibens von Datensätzen in den nicht-flüchtigen Speicher wird durch das Abspeichern der Adressverwaltung der nächsten freien Speicheradresse (d.h. des nächsten freien Programmierbereichs) mittels der dem weiteren Datenspeicher zugeordneten (und im Falle der Realisierung via Chipkarte oder Smartcard typischerweise vorgesehenen) Sicherheitsmechanismen bewirkt.

Gemäß einer Ausgestaltung wird vor dem Schreiben eines jeweiligen Datensatzes in den nicht-flüchtigen Datenspeicher aus dem weiteren Datenspeicher die Speicheradresse des Zeigers ausgelesen, ab der der Datensatz in den nicht-flüchtigen Speicher geschrieben werden kann. Mit anderen Worten wird hierdurch der zu verwendende Programmierbereich festgestellt.

Um zu überprüfen, ob das Schreiben des Datensatzes in den nicht-flüchtigen Datenspeicher erfolgreich war, wird vor dem Schreiben eines jeweiligen Datensatzes in den nicht-flüchtigen Speicher überprüft, ob der Speicherbereich, der auf die Speicheradresse, auf die der Zeiger verweist, folgt, sich in einem gelöschten Zustand befindet.

Dabei erfolgt das Speichern des Datensatzes nur dann, wenn sich der überprüfte Speicherbereich in einem gelöschten Zustand befindet. Andernfalls, wenn der überprüfte Speicherbereich nicht gelöscht ist, erfolgt eine Reorganisation zumindest der Speicherseite, in der der überprüfte Speicherbereich liegt.

Die Reorganisation umfasst folgende Schritte:
(a) Gruppieren desjenigen Speicherbereichs der Speicherseite des nicht-flüchtigen Datenspeichers, der gültig beschrieben ist, in eine andere Speicherseite des nicht-flüchtigen Datenspeichers;
(b) Löschen der Speicherseite;
(c) Beschreiben der Speicherseite mit den gruppierten Daten der anderen Speicherseite; und
(d) Schreiben des Datensatzes in die Speicherseite, beginnend mit der Speicheradresse auf die der Zeiger verweist.

Um die Konsistenz der geschriebenen Daten sicherzustellen, ist weiter vorgesehen, die in die andere Speicherseite des nicht-flüchtigen Speichers geschriebenen Daten zusätzlich in den weiteren Datenspeicher zur Zwischenspeicherung zu schreiben. Dieser Schritt wird vorzugsweise nach Schritt (a) durchgeführt. Beispielsweise kann dies durch Nutzung einer Zustandsmaschine (State Machine) der Vorrichtung erfolgen.

Es ist weiterhin vorteilhaft, wenn die Zwischenspeicherung in dem weiteren Datenspeicher durch eine Markierung in dem weiteren Datenspeicher signalisiert wird. Auch dieser Schritt wird zweckmäßigerweise nach Schritt (a) durchgeführt, wobei die Markierung durch das Schreiben der Zustandsmaschine in den weiteren Datenspeicher realisiert sein kann. Nach dem Löschen der Daten der Speicherseite aus dem weiteren Datenspeicher wird die Markierung entfernt oder auf einen anderen Wert gesetzt, wodurch das Löschen der Speicherseite signalisiert ist. Dies kann beispielsweise durch einen anderen Zustand der Zustandsmaschine (z.B. Block gelöscht) signalisiert werden.

Zweckmäßigerweise ist in dem weiteren Datenspeicher ein Zähler vorgesehen, der mit jeder Reorganisation des nicht-flüchtigen Datenspeichers inkrementiert wird. Hierdurch ist ein Rückschluss auf Fehler des nicht-flüchtigen Datenspeichers oder dessen Manipulation möglich. Der Zähler kann beispielsweise erfassen, wie oft die Zustandsmaschine in dem weiteren Datenspeicher verwendet wurde.

In einer weiteren zweckmäßigen Ausgestaltung wird ein Datensatz dadurch in den nicht-flüchtigen Datenspeicher geschrieben, dass dieser zunächst sicher in den weiteren Datenspeicher und anschließend aus dem weiteren Datenspeicher in den nicht-flüchtigen Datenspeicher geschrieben wird. Hierbei werden die Mechanismen des sicheren Schreibens des weiteren Datenspeichers in vorteilhafter Weise genutzt, wobei im Ergebnis das sichere Schreiben von Datensätzen in den nicht-flüchtigen Datenspeicher ermöglicht wird.

Das sichere Schreiben des Zeigers und/oder des Datensatzes basiert auf einem Mechanismus, der den Schreibvorgang in den weiteren Datenspeicher so absichert, dass der Speicherinhalt auch nach einer Stromunterbrechung des weiteren Datenspeichers in einem definierten Zustand ist oder in einen solchen zurückgeführt wird.

Die Erfindung wird nachfolgend näher anhand der Zeichnung erläutert. Es zeigen:
- Fig. 1: einen schematischen Aufbau eines NAND-Flash-Datenspeichers beim sequentiellen Schreiben von Daten, und
- Fig. 2: eine schematische Darstellung einer erfindungsgemäßen Vorrichtung zum Schreiben von Datensätzen in einen nicht-flüchtigen Datenspeicher.

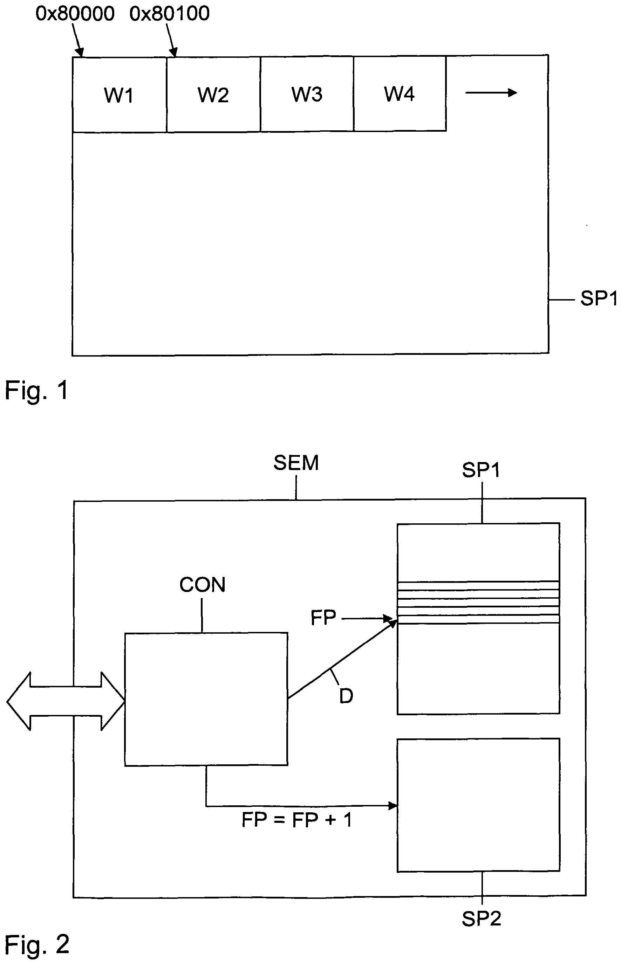

Fig. 1 zeigt den schematischen Aufbau eines Datenspeichers SP1, der mehrere, sequentiell in den Datenspeicher SP1 geschriebene Speicherwörter W1, W2, W3, W4 aufweist. Ein derartiger Datenspeicher SP1 ist beispielsweise ein Flash-Speicher in NAND-Technologie. Fig. 1 zeigt hierbei die Belegung des Datenspeichers SP1, in den das Speicherwort W1 in die Speicherdresse 0x80000, das Speicherwort W2 in die Speicheradresse 0x80100 usw. geschrieben ist. Um ein sicheres Schreiben der Speicherwörter, welche beispielsweise jeweils einen oder einen Teil eines Datensatzes umfassen, in den nicht-flüchtigen Datenspeicher SP1 realisieren zu können, wird ein Zeiger FP in den nicht-flüchtigen Datenspeicher SP1 nach dem erfolgten Schreiben eines Datenspeichers in den Datenspeicher SP1 mit seinem nächsten Wert sicher in einen zweiten Speicher SP2 geschrieben. Der Zeiger FP gibt dabei an, wohin das nächsten Speicherwort, d.h. wohin der nächste Datensatz, zu schreiben ist. Der Zeiger FP in dem weiteren Datenspeicher SP zeigt hierbei immer auf die nächste freie, zu verwendende Speicheradresse. Eine dieses Vorgehen ermöglichende Vorrichtung ist schematisch in Fig. 2 gezeigt.

Mit SEM ist ein Sicherheitsmodul, z.B. eine sog. Cash Control Unit CCU, gekennzeichnet, in dem sequentiell Buchungsdatensätze eingeschrieben werden sollen. Diese weist als ersten Datenspeicher SP1 den eingangs erwähnten NAND-Flash-Speicher auf. Der weitere Datenspeicher SP2 ist beispielsweise ein EEPROM, welcher eine Funktionalität für sicheres Schreiben aufweist. Unter dem Begriff "sicheres Schreiben" wird hierbei ein Mechanismus verstanden, der einen Schreibvorgang in einen nicht-flüchtigen Speicher so absichert, dass der Speicherinhalt auch nach einer Stromunterbrechung in einem definierten Zustand ist oder in einen solchen zurückgeführt wird. Der weitere Datenspeicher SP2 kann zur Realisierung dieser Funktionalität in einem Chipmodul einer Chipkarte oder Smartcard (sog. ICC: Integrated Chip Card) integriert sein.

Das Sicherheitsmodul SEM umfasst weiterhin einen Controller CON, welcher Daten D beispielsweise von einem nicht dargestellten Rechner (Terminal) oder Endgerät (z.B. Mobilfunkendgerät) entgegennehmen kann und in den nicht-flüchtigen Datenspeicher SP1 einspeichern kann. Der in dem weiteren Datenspeicher SP2 sicher geschriebene Zeiger FP zeigt dabei immer auf die nächste, für einen Schreibvorgang zu verwendende Speicheradresse.

Nach erfolgtem Schreiben der Daten D in den Datenspeicher SP1 wird der Zeiger mit seinem nächsten Wert (FP = FP + 1) wiederum sicher in den zweiten Datenspeicher SP2 geschrieben.

Um jede einzelne Speicherseite mit Hilfe des sicheren Schreibens via des in der Chipkarte vorgesehenen weiteren Datenspeichers SP2 realisieren zu können, werden folgende Schritte durchgeführt:
1. Aus dem weiteren Datenspeicher SP2 wird die Startadresse für das nächste zu schreibende Speicherwort (Datensatz) ausgelesen. Die Startadresse entspricht dabei dem weiteren Datenspeicher SP2. Das Auslesen kann beispielsweise mit "Read-Binary" erfolgen.
2. Der nicht-flüchtige Datenspeicher SP1 wird nun ab dieser Startadresse mit dem zu speichernden Speicherwort (Datensatz) geschrieben. Ein Speicherwort kann hierbei eine vorgegebene Länge, von z.B. 256 Byte, aufweisen.
3. Die nächste freie Speicheradresse wird nun in den weiteren Datenspeicher SP2 eingeschrieben, wodurch der Zeiger wieder auf die nächste zu verwendende Speicheradresse zeigt. Dieser Vorgang wird als "Update-Binary" bezeichnet. Nach dem Einschreiben des nunmehr aktuellen Zeigers kann von dem Controller CON oder einer dem weiteren Datenspeicher SP2 zugeordnete Logik optional ein Befehl ausgegeben werden, welcher das sichere Schreiben des Datensatzes in dem nicht-flüchtigen Speicher signalisiert.

Um eine Überprüfung durchzuführen, ob nicht während dem Beschreiben (Programmieren) des nicht-flüchtigen Datenspeichers SP1 dessen Versorgungsspannung abgeschaltet wurde, wird vor dem Beschreiben des Datenspeichers SP1 eine Überprüfung durchgeführt, ob nach der im Schritt 1 ausgelesenen Startadresse der darauf folgende Speicherbereich sich in einem gelöschten Zustand befindet. Ist dies der Fall, wird das Beschreiben gemäß Schritt 2 durchgeführt. Befindet sich der Speicherbereich jedoch nicht im gelöschten Zustand, so wird eine Reorganisation der betreffenden Speicherseite durchgeführt.

Da eine Speicherseite des nicht-flüchtigen Datenspeichers SP1 nur als Ganzes gelöscht werden kann, werden folgende Schritte durchgeführt:
4. Gruppieren desjenigen Speicherbereichs der (d.h. ersten) Speicherseite des nicht-flüchtigen Datenspeichers SP1, der gültig beschrieben ist, in eine andere (zweite) Speicherseite des nicht-flüchtigen Datenspeichers.
5. Löschen der (ersten) Speicherseite.
6. Erneutes Beschreiben der (ersten) Speicherseite mit den gruppierten Daten der anderen (zweiten) Speicherseite.
7. Schreiben des Datensatzes in die (erste) Speicherseite, beginnend mit der Speicheradresse, auf die der Zeiger verweist.

Um die Schritte 4 bis 6 auf Konsistenz überprüfen zu können, werden die in der anderen Speicherseite des nicht-flüchtigen Speichers geschriebenen Daten zusätzlich in den weiteren Datenspeicher zur Zwischenspeicherung geschrieben. Dies kann beispielsweise unter Nutzung einer Zustandsmaschine (State Machine) erfolgen. Die Zwischenspeicherung in dem weiteren Datenspeicher wird durch eine Markierung in dem weiteren Datenspeicher signalisiert. Die Markierung kann beispielsweise das Schreiben der Zustandsmaschine in den weiteren Datenspeicher sein. Hierdurch wird ein sicheres Umgruppieren desjenigen Speicherbereichs der (ersten) Speicherseite des nicht-flüchtigen Datenspeichers signalisiert. Nach dem Löschen der Daten der (ersten) Speicherseite aus dem weiteren Datenspeicher wird die Markierung entfernt oder auf einen anderen Wert gesetzt, wodurch das Löschen der (ersten) Speicherseite angezeigt wird. Dies kann beispielsweise durch das Umsetzen der Zustandsmaschine auf einen anderen Zustand erfolgen. Nach dem Beschreiben des nicht-flüchtigen Datenspeichers SP1 kann die Zustandsmaschine bzw. die Markierung wieder gelöscht werden, da der Datenspeicher SP1 nun den aktuellen Zustand aufweist.

Zudem kann in dem weiteren Datenspeicher SP2 ein Zähler vorgesehen werden, der mit jeder Reorganisation des nicht-flüchtigen Datenspeichers SP1 inkrementiert wird. Der Zähler kann beispielsweise die Anzahl enthalten, wie oft die Zustandsmaschine verwendet wurde. Mit dem Zähler können Rückschlüsse gewonnen werden, ob der nicht-flüchtige Datenspeicher SP1 bzw. das Sicherheitsmodul SEM ein technisches Problem aufweist. Ebenso sind Rückschlüsse möglich, ob von außerhalb versucht wurde, eine Manipulation des Sicherheitsmoduls SEM hinsichtlich der Schreibvorgänge auf den nicht-flüchtigen Speicherbereich durchzuführen.

Um die Sicherheit beim Schreiben von Daten in den nicht-flüchtigen Datenspeicher SP1 weiter zu erhöhen, kann weiter vorgesehen sein, die zu schreibenden Daten zunächst sicher in den weiteren Datenspeicher SP2 zu schreiben. Anschließend werden die Daten aus dem weiteren Datenspeicher SP2 wieder sicher in den nicht-flüchtigen Datenspeicher SP1 geschrieben, wobei dies nach dem sicheren Schreiben in den weiteren Speicher SP2 erfolgt.

Das erfindungsgemäße Vorgehen verbindet die Vorteile von Datenspeichern in NAND-Flash-Technologie bezüglich der sequentiellen Programmierung und der maximalen Performance mit dem bewährten sicheren Schreibkonzept, welches von Chipkarten bekannt ist. Insbesondere werden die Vorteile der NAND-Flash-Technologie beibehalten, da keine Berücksichtigung der maximalen Anzahl von Schreibzyklen auf eine Speicherseite erfolgen muss. Demgegenüber ist es bei dem weiteren Datenspeicher SP2, der vorzugsweise in einer Chipkarte mit entsprechendem Steuermodul implementiert ist, ohne Probleme möglich, eine sehr große Anzahl von Schreib-/Löschvorgängen durchzuführen. Typischerweise können bei den in Chipkarten eingesetzten Datenspeichern, die in der Regel als EEPROM ausgebildet sind, 500.000 solcher Schreib-/Löschvorgänge durchgeführt werden.

## Patentansprüche

1. Verfahren zum gesicherten Schreiben von Datensätzen in einen nicht-flüchtigen Datenspeicher (SP1), der mehrere zu Speicherseiten gruppierte Speicherwörter (W1, W2, W3, W4) aufweist, wobei ein Datensatz aus einem oder mehreren Speicherwörtern besteht, insbesondere vom Typ NAND-Flash, bei dem
- die Datensätze in den nicht-flüchtigen Datenspeicher (SP1) sequentiell eingeschrieben werden;
- ein Zeiger (FP) in den nicht-flüchtigen Datenspeicher (SP1) nach dem erfolgten Schreiben eines Datensatzes sicher in einen weiteren Datenspeicher (SP2) geschrieben wird, wobei der Zeiger (FP) eine Speicheradresse angibt, in die oder ab der ein nächster Datensatz in den nicht-flüchtigen Datenspeicher zu schreiben ist
- wobei vor dem Schreiben eines jeweiligen Datensatzes in den nicht-flüchtigen Speicher (SP1) überprüft wird, ob der Speicherbereich, der auf die Speicheradresse, auf die der Zeiger (FP) verweist, folgt, sich in einem gelöschten Zustand befindet,
- wobei eine Reorganisation zumindest der Speicherseite erfolgt, in der der überprüfte Speicherbereich liegt, wenn der überprüfte Speicherbereich nicht gelöscht ist.

2. Verfahren nach Anspruch 1, bei dem vor dem Schreiben eines Datensatzes in den nicht-flüchtigen Datenspeicher (SP1) aus dem weiteren Datenspeicher (SP2) die Speicheradresse des Zeigers (FP) ausgelesen wird, ab der der Datensatz in den nicht-flüchtigen Speicher (SP1) geschrieben werden kann.

3. Verfahren nach Anspruch 1 oder 2, bei dem das Speichern des Datensatzes erfolgt, wenn sich der überprüfte Speicherbereich in einem gelöschten Zustand befindet.

4. Verfahren nach Anspruch 3, bei dem die Reorganisation folgende Schritte umfasst:
(a) Kopieren desjenigen Speicherbereichs der Speicherseite des nicht-flüchtigen Datenspeichers, der gültig beschrieben ist, in eine andere Speicherseite des nicht-flüchtigen Datenspeichers;
(b) Löschen der Speicherseite;
(c) Beschreiben der Speicherseite mit den kopierten Daten der anderen Speicherseite; und
(d) Schreiben des Datensatzes in die Speicherseite, beginnend mit der Speicheradresse, auf die der Zeiger verweist.

5. Verfahren nach Anspruch 4, bei dem die in der anderen Speicherseite des nicht-flüchtigen Speichers (SP1) geschriebenen Daten zusätzlich in den weiteren Datenspeicher (SP2) zur Zwischenspeicherung geschrieben werden.

6. Verfahren nach Anspruch 5, bei dem die Zwischenspeicherung in dem weiteren Datenspeicher (SP2) durch eine Markierung in dem weiteren Datenspeicher (SP2) signalisiert wird.

7. Verfahren nach Anspruch 6, bei dem die Markierung nach dem Löschen der Daten der Speicherseite aus dem weiteren Datenspeicher (SP2) entfernt oder auf einen anderen Wert gesetzt wird, der das Löschen der Speicherseite signalisiert.

8. Verfahren nach einem der Ansprüche 3 bis 7, bei dem in dem weiteren Datenspeicher (SP2) ein Zähler vorgesehen ist, der mit jeder Reorganisation des nicht-flüchtigen Datenspeichers (SP1) inkrementiert wird.

9. Verfahren nach einem der vorhergehenden Ansprüche, bei dem ein Datensatz dadurch in den nicht-flüchtigen Datenspeicher (SP1) geschrieben wird, dass dieser zunächst sicher in den weiteren Datenspeicher (SP2) und anschließend aus dem weiteren Datenspeicher (SP2) in den nicht-flüchtigen Datenspeicher (SP1) geschrieben wird.

10. Verfahren nach einem der vorhergehenden Ansprüche, bei dem das sichere Schreiben des Zeigers und/oder des Datensatzes auf einem Mechanismus basiert, der den Schreibvorgang in den weiteren Datenspeicher (SP2) so absichert, dass der Speicherinhalt auch nach einer Stromunterbrechung des weiteren Datenspeichers (SP2) in einem definierten Zustand ist oder in einen solchen zurückgeführt wird.

11. Vorrichtung zum gesicherten Schreiben von Datensätzen, umfassend:
- einen nicht-flüchtigen Datenspeicher (SP1), insbesondere vom Typ NAND-Flash, der mehrere zu Speicherseiten gruppierte Speicherwörter (W1, W2, W3, W4) aufweist, wobei ein Datensatz aus einem oder mehreren Speicherwörtern besteht, wobei die Datensätze sequentiell in den nicht-flüchtigen Datenspeicher (SP1) einschreibbar sind;
- einen weiteren Datenspeicher (SP2), insbesondere ein EEPROM, dem ein Mittel für sicheres Schreiben von Daten zugeordnet ist;
- einen Controller, der dazu ausgebildet ist, einen Zeiger (FP) in den nicht-flüchtigen Datenspeicher (SP1) nach dem erfolgten Schreiben eines Datensatzes sicher in den weiteren Datenspeicher (SP2) zu schreiben, wobei der Zeiger eine Speicheradresse angibt, in die ein nächster Datensatz in den nicht-flüchtigen Datenspeicher (SP1) zu schreiben ist,
- und der weiter dazu ausgebildet ist, vor dem Schreiben eines jeweiligen Datensatzes in den nicht-flüchtigen Speicher (SP1) zu überprüfen, ob der Speicherbereich, der auf die Speicheradresse, auf die der Zeiger (FP) verweist, folgt, sich in einem gelöschten Zustand befindet,
- und eine Reorganisation zumindest der Speicherseite vorzunehmen, in der der überprüfte Speicherbereich liegt, wenn der überprüfte Speicherbereich nicht gelöscht ist.

12. Vorrichtung nach Anspruch 11, bei der der weitere Datenspeicher (SP2) der Datenspeicher eines tragbaren Datenträgers, insbesondere einer Chipkarte oder einer Smartcard, ist.

## Claims

1. A method for the secure writing of data sets to a non-volatile data memory (SP1) which has several memory words (W1, W2, W3, W4) grouped into memory pages, wherein a data set consists of one or several memory words, in particular of the NAND Flash type, in which
- the data sets are sequentially written to the non-volatile data memory (SP1);
- a pointer (FP) towards the non-volatile data memory (SP1) is written securely to a further data memory (SP2) after the effected writing of a data set, wherein the pointer (FP) states a memory address to which or from which a next data set is to be written to the non-volatile data memory
- wherein it is checked prior to the writing of a respective data set to the non-volatile memory (SP1) whether the memory area which follows the memory address which the pointer (FP) refers to is in a deleted state,
- wherein a reorganization is effected of at least the memory page in which the checked memory area lies, if the checked memory area is not deleted.

2. The method according to claim 1, in which prior to the writing of a data set to the non-volatile data memory (SP1) from the further data memory (SP2) the memory address of the pointer (FP) is read out, from which the data set can be written to the non-volatile memory (SP1).

3. The method according to claim 1 or 2, in which the storing of the data set is effected, if the checked memory area is in a deleted state.

4. The method according to claim 3, in which the reorganization comprises the following steps:
a) copying that memory area of the memory page of the non-volatile data memory which is written in valid form to another memory page of the non-volatile data memory;
b) deleting the memory page;
c) writing the memory page using the copied data of the other memory page; and
d) writing the data set to the memory page, beginning with the memory address which the pointer refers to.

5. The method according to claim 4, in which the data written to the other memory page of the non-volatile memory (SP1) are additionally written to the further data memory (SP2) for intermediate storage.

6. The method according to claim 5, in which the intermediate storage in the further data memory (SP2) is signaled by a flag in the further data memory (SP2).

7. The method according to claim 6, in which after the deleting of the data of the memory page the flag is removed from the further data memory (SP2) or is set to another value which signals the deleting of the memory page.

8. The method according to any of claims 3 to 7, in which in the further data memory (SP2) a counter is provided which is incremented for each reorganization of the non-volatile data memory (SP1).

9. The method according to any of the preceding claims, in which a data set is written to the non-volatile data memory (SP1) by the fact that this is first written securely to the further data memory (SP2) and thereupon from the further data memory (SP2) to the non-volatile data memory (SP1).

10. The method according to any of the preceding claims, in which the secure writing of the pointer and/or the data set is based on a mechanism which secures the writing operation to the further data memory (SP2) such that the memory content is in a defined state or is returned to such a state even after a power interruption of the further data memory (SP2).

11. An apparatus for the secure writing of data sets, comprising:
- a non-volatile data memory (SP1), in particular of the NAND Flash type, which has several memory words (W1, W2, W3, W4) grouped to memory pages, wherein a data set consists of one or several memory words, wherein the data sets are sequentially writeable to the non-volatile data memory (SP1);
- a further data memory (SP2), in particular an EEPROM, which is associated with a means for securely writing data;
- a controller which is configured for writing a pointer (FP) towards the non-volatile data memory (SP1) securely to the further data memory (SP2) after the effected writing of a data set, wherein the pointer states a memory address to which a next data set is to be written to the non-volatile data memory (SP1), and which is further configured for checking prior to the writing of a respective data set to the non-volatile memory (SP1) whether the memory area which follows the memory address which the pointer (FP) refers to is in a deleted state,
- and to perform a reorganization of at least the memory page in which the checked memory area lies, if the checked memory area is not deleted.

12. An apparatus according to claim 11, in which the further data memory (SP2) is the data memory of a portable data carrier, in particular of a chip card or a smart card.

## Revendications

1. Procédé d'écriture sécurisée de jeux de données dans une mémoire de données (SP1) non volatile comportant plusieurs mots de mémoire (W1, W2, W3, W4) regroupés en pages de mémoire, cependant qu'un jeu de données consiste en un ou en plusieurs mots de mémoire, en particulier du type NAND-Flash, dans lequel
- les jeux de données sont écrits séquentiellement dans la mémoire de données (SP1) non volatile ;
- un pointeur (FP) dans la mémoire de données (SP1) non volatile est, après l'écriture aboutie d'un jeux de données, écrit de manière sécurisée dans une autre mémoire de données (SP2), cependant que le pointeur (FP) indique une adresse mémoire dans laquelle ou à partir de laquelle un prochain jeu de données est à écrire dans la mémoire de données non volatile
- cependant que, avant l'écriture d'un jeux de données respectif dans la mémoire (SP1) non volatile, il est vérifié si la zone de mémoire qui suit l'adresse mémoire à laquelle renvoie le pointeur (FP) se trouve dans un état effacé,
- cependant qu'une réorganisation d'au moins la page de mémoire dans laquelle est située la zone de mémoire vérifiée a lieu quand la zone de mémoire vérifiée n'est pas effacée.

2. Procédé selon la revendication 1, dans lequel, avant l'écriture d'un jeu de données dans la mémoire de données (SP1) non volatile, l'adresse mémoire du pointeur (FP) à partir de laquelle le jeu de données peut être écrit dans la mémoire (SP1) non volatile est lue depuis l'autre mémoire de données (SP2).

3. Procédé selon la revendication 1 ou 2, dans lequel la mémorisation du jeu de données a lieu quand la zone de mémoire vérifiée se trouve dans un état effacé.

4. Procédé selon la revendication 3, dans lequel la réorganisation comprend les étapes suivantes :
(a) copie de la zone de mémoire, de la page de mémoire de la mémoire de données non volatile, qui est valablement en écriture, dans une autre page de mémoire de la mémoire de données non volatile ;
(b) effacement de la page de mémoire ;
(c) mise en écriture de la page de mémoire avec les données copiées de l'autre page de mémoire ; et
(d) écriture du jeu de données dans la page de mémoire en commençant par l'adresse mémoire à laquelle le pointeur renvoie.

5. Procédé selon la revendication 4, dans lequel les données écrites dans l'autre page de mémoire de la mémoire (SP1) non volatile sont en outre écrites dans l'autre mémoire de données (SP2) pour mémorisation intermédiaire.

6. Procédé selon la revendication 5, dans lequel la mémorisation intermédiaire dans l'autre mémoire de données (SP2) est signalisée par un marquage dans l'autre mémoire de données (SP2).

7. Procédé selon la revendication 6, dans lequel le marquage est, après l'effacement des données de la page de données, enlevé de l'autre mémoire de données (SP2) ou mis sur une autre valeur qui signale l'effacement de la page de mémoire.

8. Procédé selon une des revendications de 3 à 7, dans lequel, dans l'autre mémoire de données (SP2), un compteur est prévu, lequel, avec chaque réorganisation de la mémoire de données (SP1) non volatile, est incrémenté.

9. Procédé selon une des revendications précédentes, dans lequel un jeu de données est écrit dans la mémoire de données (SP1) non volatile en ce que ce dernier est tout d'abord écrit de manière sécurisée dans l'autre mémoire de données (SP2), et ensuite depuis l'autre mémoire de données (SP2) dans la mémoire de données non volatile (SP1).

10. Procédé selon une des revendications précédentes, dans lequel l'écriture sécurisée du pointeur et/ou du jeu de données est basée sur un mécanisme qui sécurise de telle manière le processus d'écriture dans l'autre mémoire de données (SP2) que le contenu de mémoire, aussi après une interruption de courant de l'autre mémoire de données (SP2), est dans un état défini ou est ramené à un tel état.

11. Dispositif d'écriture sécurisée de jeux de données, comprenant :
- une mémoire de données (SP1) non volatile, en particulier du type NAND-Flash, laquelle comporte plusieurs mots de mémoire (W1, W2, W3, W4) regroupés en pages de mémoire, cependant qu'un jeu de données consiste en un ou en plusieurs mots de mémoire, cependant que les jeux de données peuvent être écrits séquentiellement dans la mémoire de données (SP1) non volatile ;
- une autre mémoire de données (SP2), en particulier une EEPROM, à laquelle un moyen d'écriture sécurisée de données est affecté ;
- un contrôleur conçu pour écrire de manière sécurisée un pointeur (FP) dans la mémoire de données (SP1) non volatile après l'écriture aboutie d'un jeux de données dans l'autre mémoire de données (SP2), cependant que le pointeur indique une adresse mémoire dans laquelle un prochain jeu de données est à écrire dans la mémoire de données non volatile (SP1),
- et qui est en outre conçu pour, avant l'écriture d'un jeux de données respectif dans la mémoire (SP1) non volatile, vérifier si la zone de mémoire qui suit l'adresse mémoire à laquelle renvoie le pointeur (FP) se trouve dans un état effacé,
- et pour effectuer une réorganisation d'au moins la page de mémoire dans laquelle est située la zone de mémoire vérifiée quand la zone de mémoire vérifiée n'est pas effacée.

12. Dispositif selon la revendication 11, dans lequel l'autre mémoire de données (SP2) est la mémoire de données d'un support de données portable, en particulier d'une carte à puce ou d'une carte intelligente.
